# EUROPEAN PATENT APPLICATION

(11) **EP 4 044 696 A1**
(43) Date of publication of application: **17.08.2022**
(21) Application number: 19948258.9
(22) Date of filing: 11.10.2019
(51) Int. Cl.: H04W 56/00, H04W 76/27

(54) **TERMINAL**

(71) Applicant: NTT DOCOMO, INC., Chiyoda-ku Tokyo 100-6150 (JP)
(72) Inventor: MIN Tianyang, Tokyo 100-6150 (JP); WANG Lihui, Beijing 100190 (CN)
(74) Representative: Hoffmann Eitle
(86) International application number: PCT/JP2019/040321
(87) International publication number: WO 2021/070388

(57) **Abstract**

A terminal 100 includes: a control unit 111 that starts a procedure of transition of the terminal 100 from a non-connection state to a connection state in a radio resource control layer, between the terminal 100 and an NR network; a radio transmitting unit 101 that transmits a message requesting provision of time information including NR time or time information including TSN time, to the NR network, in the procedure; and a radio receiving unit 103 that receives the time information from the NR network.

## Description

### TECHNICAL FIELD

The present invention relates to a terminal that receives time information.

### BACKGROUND ART

The 3rd Generation Partnership Project (3GPP) specifies Long Term Evolution (LTE) and specifies LTE-Advanced (hereinafter, collectively referred to as LTE) for the purpose of further speeding up LTE. In addition, in the 3GPP, specification of a succession system of LTE, called 5G or New Radio (NR), has been studied.

In LTE, a radio base station (eNB) provides a terminal (UE) with time information including the time used in LTE (refer to Non Patent Document 1).

As well as LTE, in NR, it has been discussed that a radio base station (gNB) provides the UE with time information including the time used in NR (hereinafter, referred to as NR time).

After receiving the time information from the gNB, the UE performs operation in synchronization with the NR time included in the time information.

Furthermore, in the 3GPP, it has been discussed that in Time-Sensitive Networking (TSN) enabling high-precision time synchronization between a control source and an end station, the control source deliveries the time used in TSN to the end station through a NR system (refer to Non Patent Document 2).

Particularly, it has been discussed that the gNB provides the UE, which is connected to the end station, with time information including the time used in TSN (hereinafter, referred to as TSN time) in the NR system.

After receiving the time information from the gNB, the UE provides the end station with the TSN time included in the time information.

### PRIOR ART DOCUMENT

### NON-PATENT DOCUMENT

Non Patent Document 1: 3GPP TS 36.331 V15.6.0 3rd Generation Partnership Project; Technical Specification Group Radio Access Network; Evolved Universal Terrestrial Radio Access (E-UTRA); Radio Resource Control (RRC); Protocol specification (Release 15), 3GPP, June 2019 Non Patent Document 2: 3GPP TR 23.734 V16.2.0 3rd Generation Partnership Project; Technical Specification Group Services and System Aspects; Study on enhancement of 5G System (5GS) for vertical and Local Area Network (LAN) services (Release 16), 3GPP, June 2019

### SUMMARY OF THE INVENTION

In the 3GPP, a method for a terminal to request the gNB to provide time information including the NR time or the TSN time, has been studied.

Meanwhile, considering the execution of operation in the UE, prompt and persistent provision of the time information including the NR time is preferable.

Similarly, considering the realization of high-precision time synchronization in TSN, prompt and persistent provision of the time information including the TSN time is preferable.

The present invention has been made in consideration of such a situation, and an object of the present invention is to provide a terminal capable of receiving from a radio network, time information including the time used in the radio network or time information including the time used in another network such as TSN, different from the radio network, promptly and persistently.

According to one aspect of the present invention, there is provided a terminal (terminal 100) including: a control unit (control unit 111) that starts a procedure of transition of the terminal from a non-connection state to a connection state in a radio resource control layer, between the terminal and a radio network; a transmitting unit (e.g., radio transmitting unit 101) that transmits a message requesting provision of time information including time used in the radio network, to the radio network, in the procedure; and a receiving unit (radio receiving unit 103) that receives the time information from the radio network.

According to one aspect of the present invention, there is provided a terminal (terminal 100) including: a control unit (control unit 111) that starts a procedure of transition of the terminal from a non-connection state to a connection state in a radio resource control layer, between the terminal and a radio network; a transmitting unit (e.g., radio transmitting unit 101) that transmits a message requesting provision of time information including time used in another network different from the radio network, to the radio network, in the procedure; and a receiving unit (radio receiving unit 103) that receives the time information from the radio network.

### BRIEF DESCRIPTION OF DRAWINGS

Fig. 1 is an overall schematic configuration diagram of a control system 10.
Fig. 2 is a functional block configuration diagram of a terminal 100.
Fig. 3 is a diagram explaining an example of information (request information) requesting provision of time information.
Fig. 4 is a sequence diagram of a connection procedure in time delivery.
Fig. 5 is a sequence diagram of a reconnection procedure in time delivery.
Fig. 6 is a sequence diagram of a resume procedure in time delivery.
Fig. 7 is a sequence diagram of a reconfiguration procedure in time delivery.
Fig. 8 is an overall schematic configuration diagram of a control system 10a.
Fig. 9 is a table showing an association between TSN times and time identifiers.
Fig. 10 is a diagram illustrating an example of a hardware configuration of the terminal 100.

### MODES FOR CARRYING OUT THE INVENTION

Hereinafter, embodiments will be described with reference to the drawings. Note that the same functions or configurations are denoted by the same or similar reference numerals, and the descriptions thereof will be omitted as appropriate.

### (1) Overall Schematic Configuration of Control System

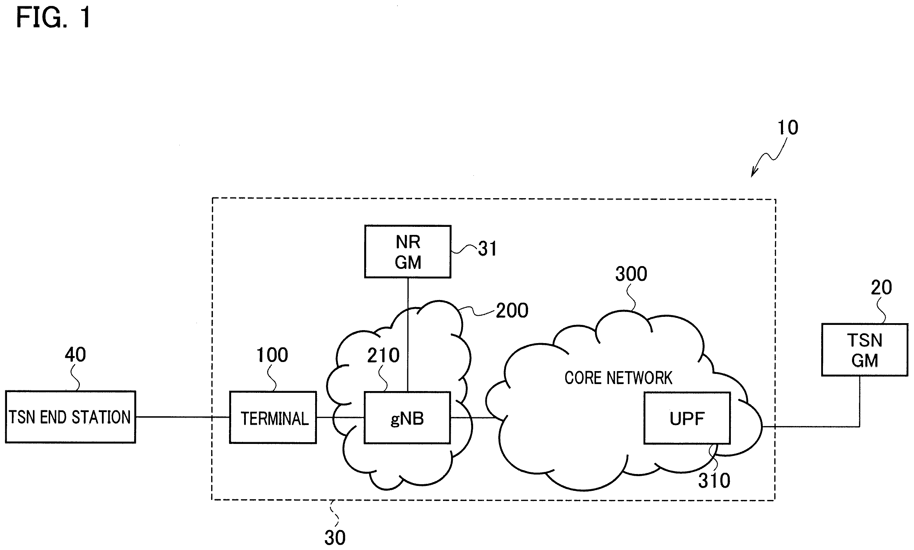

Fig. 1 is an overall schematic configuration diagram of a control system 10 according to the present embodiment.

The control system 10 includes a TSN grandmaster (TSN GM) 20, an NR system 30, and a TSN end station 40. In the control system 10, a control source in TSN (not illustrated) controls the TSN end station 40 in real time through the NR system 30. Note that a specific configuration of the control system 10 including the number of TSN GMs 20 and the number of TSN end stations 40, is not limited to the example illustrated in Fig. 1.

The TSN GM 20 oscillates a clock as the operation timing in TSN. Hereinafter, the time generated on the basis of the clock oscillated by the TSN GM 20 is referred to as TSN time. The TSN time is a reference time that is applied in TSN.

The TSN time is used for realization of high-precision time synchronization between the control source in TSN and the TSN end station 40. Thus, the control source in TSN and the TSN end station 40 need to synchronize with the TSN time.

Note that TSN may be referred to as another network different from a radio network. In this case, the TSN time is referred to as the time used in another network different from the radio network. Moreover, TSN may be referred to as a network in which all nodes included in the network share the same time. Furthermore, TSN may be referred to as a network that supports deterministic communication or a network that supports isochronal communication.

The NR system 30 includes an NR grandmaster (NR GM) 31, a terminal 100, a Next Generation-Radio Access Network 200 (hereinafter, referred to as NG-RAN 200), and a core network 300. Note that the terminal is also referred to as user equipment (UE). Moreover, a specific configuration of the NR system 30 including the number of terminals and the number of radio base stations to be described later, is not limited to the example illustrated in Fig. 1.

The NR GM 31 oscillates a clock as the operation timing in the NR system 30. Hereinafter, the time generated on the basis of the clock oscillated by the NR GM 31 is referred to as NR time. The NR time is a reference time that is applied in the NR system 30.

The terminal 100 performs radio communication according to NR among the terminal 100, the NG-RAN 200, and the core network 300. TSN can be supported by the terminal 100.

The NG-RAN 200 includes a plurality of NG-RAN Nodes, specifically, a radio base station (hereinafter, referred to as gNB) 210, and is connected to the core network (5GC) 300 according to NR. Note that the NG-RAN 200 and the core network 300 can be simply referred as an NR network. The terminal 100 is connected to the NR network that performs communication with the TSN GM 20. The NR network can be referred to as a radio network.

The gNB 210 is connected to the NR GM 31. In a case where the terminal 100 is connected to the gNB 210 and is used in communication service in NR, the gNB 210 transmits time information including the NR time to the terminal 100, in accordance with a request from the terminal 100, as described later, in the present embodiment. After receiving the time information, the terminal 100 acquires the NR time from the time information and then synchronizes with the NR time. The time information is, for example, a system information block (SIB) or an RRC message (DLInformationTransfer) .

The terminal 100 and the gNB 210 can support Massive MIMO in which a more highly directional beam is generated by controlling radio signals transmitted from a plurality of antenna elements, Carrier Aggregation (CA) in which a plurality of component carriers (CC) is used, Dual Connectivity (DC) in which CCs are transmitted simultaneously between a plurality of NG-RAN Nodes and the terminal, and the like. Note that the CC is also referred to as a carrier.

The core network 300 communicates with the UE 100 through the gNB 210. The core network 300 includes a User Plane Function (UPF) 310. The UPF 310 provides a function specialized in user plane processing.

The core network 300 receives the TSN time from the TSN GM 20 through the UPF 310. The core network 300 transmits the received TSN time to the gNB 210. Note that the gNB 210 can receive the TSN time directly from the TSN GM 20.

In a case where the terminal 100 is connected to the gNB 210 and is used in communication service in TSN, the gNB 210 transmits time information including the TSN time to the terminal 100, in accordance with a request from the terminal 100, as described later, in the present embodiment. After receiving the time information, the terminal 100 acquires the TSN time from the time information and then synchronizes with the TSN time. The time information is, for example, a system information block (SIB) or an RRC message (DLInformationTransfer).

After receiving the time information from the gNB 210, the terminal 100 acquires the TSN time from the time information and then transmits the TSN time to the TSN end station 40.

The TSN end station 40 is, for example, a machine provided in a manufacturing plant. On the basis of the TSN time received from the terminal 100, the TSN end station 40 updates as necessary the TSN time retained in TSN end station 40.

The TSN end station 40 receives a command from the control source in TSN through the NR system 30. On the basis of the TSN time, the control source in TSN performs time scheduling for operation of the TSN end station 40, so that real-time control is performed in the control system 10.

The terminal 100 manages a control plane connected to the NR network. A protocol stack for the control plane includes a physical (PHY) layer, a medium access control (MAC) layer, a radio link control (RLC) layer, a packet data convergence control (PDCP) layer, a radio resource control (RRC) layer, and a non-access stratum (NAS) layer.

The terminal 100 manages a user plane connected to the NR network. A protocol stack for the user plane includes a PHY layer, a MAC layer, a RLC layer, a PDCP layer, and a service data adaptation protocol (SDAP) layer.

Each of the protocol stack for the control plane and the protocol stack for the user plane is classified into layers 1 to 3 in the open systems interconnection (OSI) reference model. Layer 1 includes the PHY layer. Layer 2 includes the MAC layer, the RLC layer, the PDCP layer, and the SDAP layer. Layer 3 includes the RRC layer and the NAS layer.

The terminal 100 has one state among an RRC idle state (hereinafter, referred to as an idle state), an RRC inactive state (hereinafter, referred to as an inactive state), and an RRC connected state (hereinafter, referred to as a connected state) in the RRC layer. Note that the connected state is also referred to as a connection state. Each of the idle state and the inactive state is also referred to as a non-connection state.

The terminal 100 can transition between the idle state and the connected state. The terminal 100 can transition between the inactive state and the connected state. The terminal 100 can transition from the inactive state to the idle state.

In a case where no RRC connection is established between the terminal 100 and the gNB 210, the terminal 100 is in the idle state in the RRC layer.

In a case where the terminal 100 is in the idle state, each of the terminal 100, the gNB 210, and the core network 300 does not retain any parameter (hereinafter, referred to as context information) necessary for communication between the terminal 100 and the NR network. Thus, no communication service is performed between the terminal 100 and the NR network. Note that the context information includes, for example, Cell-Radio Network Temporary Identifier (C-RNTI).

In a case where the operation of the TSN end station 40 starts or in a case where the operation of the terminal 100 is performed, the terminal 100 needs to transition from the idle state to the connected state. In the process, the terminal 100 performs cell selection or cell reselection, and the terminal 100, the gNB 210, and the core network 300 share the context information.

As described later, the terminal 100 performs a connection procedure (initial access procedure) or a reconnection procedure, resulting in transition from the idle state to the connected state.

Meanwhile, in a case where an RRC connection is established between the terminal 100 and the gNB 210, the terminal 100 is in the inactive state or the connected state in the RRC layer.

In a case where the terminal 100 is in the inactive state, each of the terminal 100, the gNB 210, and the core network 300 retains the context information. However, in the case where the terminal 100 is in the inactive state, the NR network is incapable of identifying the terminal 100 in cell level subordinate to the gNB 210. Thus, no communication service is performed between the terminal 100 and the NR network.

In a case where the operation of the TSN end station 40 starts or in a case where the operation of the terminal 100 is performed, the terminal 100 needs to transition from the inactive state to the connected state. In the process, the terminal 100 performs cell selection or cell reselection.

As described above, in a case where the terminal 100 is in the inactive state, each node in the NR network retains the context information without discarding. Thus, the procedure necessary for resumption to the connected state is less than that in a case where the terminal 100 is in the idle state.

As described later, the terminal 100 performs a resume procedure, resulting in transition from the inactive state to the connected state.

In a case where the terminal 100 is in the connected state, each of the terminal 100, the gNB 210, and the core network 300 retains the context information. Moreover, in the case where the terminal 100 is in the connected state, the NR network is capable of identifying the terminal 100 in cell level subordinate to the gNB 210. Thus, the terminal 100 in the connected state is capable of receiving from the NR network, the time information including the TSN time or the time information including the NR time.

As described later, the terminal 100 in the connected state can perform a reconfiguration procedure.

### (2) Functional Block Configuration of Control System

Next, a functional block configuration of the control system 10 will be described. Specifically, a functional block configuration of the terminal 100 in the NR system 30 will be described. Hereinafter, only portions related to the features of the present embodiment will be described below. Therefore, the terminal 100 also includes other functional blocks that are not directly related to the features of the present embodiment.

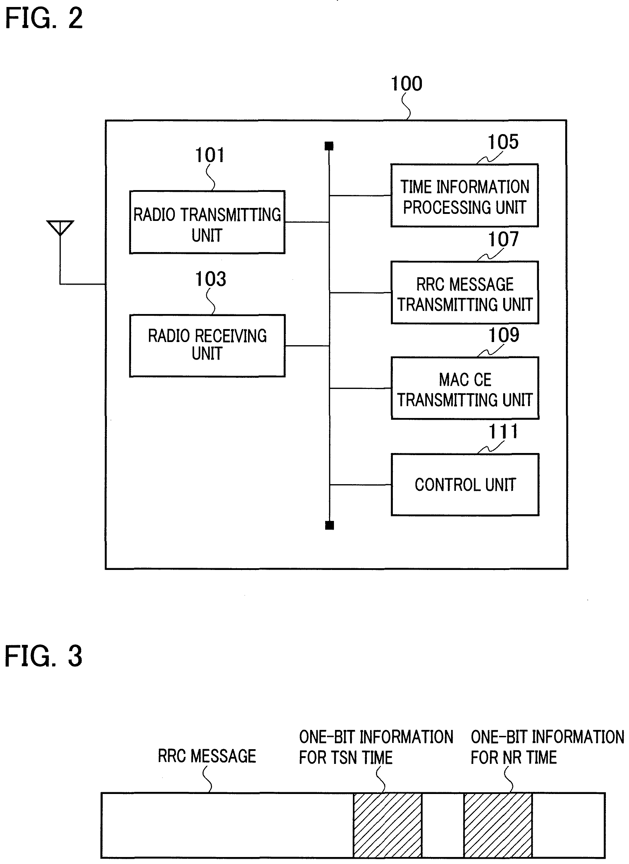

Fig. 2 is a functional block configuration diagram of the terminal 100. Note that a hardware configuration of the terminal 100 will be described later. As illustrated in Fig. 2, the terminal 100 includes a radio transmitting unit 101, a radio receiving unit 103, a time information processing unit 105, an RRC message transmitting unit 107, a MAC control element (CE) transmitting unit 109, and a control unit 111.

The radio transmitting unit 101 transmits an uplink signal (UL signal) according to NR. The radio receiving unit 103 receives a downlink signal (DL signal) according to NR. Specifically, the radio transmitting unit 101 and the radio receiving unit 103 perform radio communication between the terminal 100 and the gNB 210 through a physical uplink control channel (PUCCH), a physical uplink shared channel (PUSCH), a physical downlink control channel (PDCCH), a physical downlink shared channel (PDSCH), and a physical random access channel (PRACH) and the like.

The radio transmitting unit 101 transmits an RRC message to the gNB 210. The radio transmitting unit 101 transmits a MAC CE to the gNB 210. The radio transmitting unit 101 transmits the TSN time to the TSN end station 40.

The radio receiving unit 103 receives the time information including the TSN time or the time information including the NR time from the gNB 210.

The time information processing unit 105 acquires the time information received by the radio receiving unit 103. The time information processing unit 105 acquires the TSN time or the NR time from the time information. The time information processing unit 105 transmits the acquired TSN time to the TSN end station 40 through the radio transmitting unit 101.

The RRC message transmitting unit 107 includes in the RRC message for use in the procedure of transition of the terminal 100 from the idle state or the inactive state to the connected state, information (hereinafter, referred to as request information) requesting provision of the time information including the TSN time or the time information including the NR time. Note that the request information is also referred to as information requesting provision of the TSN time or the NR time.

Fig. 3 is a diagram explaining an example of request information. As illustrated in Fig. 3, the RRC message includes one-bit information ("0" or "1") indicating whether or not provision of the time information including the TSN time is to be requested. In a case where the terminal 100 requests provision of the time information, the RRC message transmitting unit 107 sets the value of the one-bit information to "1", for example. In this case, the request information corresponds to the value "1" of the one-bit information.

Similarly, the RRC message includes one-bit information ("0" or "1") indicating whether or not provision of the time information including the NR time is to be requested. In a case where the terminal 100 requests provision of the time information, the RRC message transmitting unit 107 sets the value of the one-bit information to "1", for example. In this case, the request information corresponds to the value "1" of the one-bit information.

Note that the RRC message can include two-bit information ("00", "01", "11", or "11") indicating whether or not provision of the time information including the TSN time or the time information including the NR time is to be requested. In a case where the terminal 100 requests provision of the time information including the TSN time, the RRC message transmitting unit 107 sets the value of the two-bit information to "01", for example. Meanwhile, in a case where the terminal 100 requests provision of the time information including the NR time, the RRC message transmitting unit 107 sets the value of the two-bit information to "10", for example. In this case, the request information corresponds to the value "01" or "10" of the two-bit information.

Moreover, the RRC message can include flag information, index information, or Boolean information, instead of one-bit information. In this case, the RRC message transmitting unit 107 sets the request information, with the flag information, the index information, or the Boolean information included in the RRC message.

Examples of the RRC message including the request information, include an RRC setup request message (RRC Setup Request), an RRC setup complete message (RRC Setup Complete), an RRC reestablishment request message (RRC Reestablishment Request), an RRC reestablishment complete message (RRC Reestablishment Complete), an RRC resume request message (RRC Resume Request), an RRC Resume Request1, and an RRC resume complete message (RRC Resume Complete).

As described later, RRC Setup Request and RRC Setup Complete are used in the connection procedure. RRC Reestablishment Request and RRC Reestablishment Complete are used in the reconnection procedure. RRC Resume Request, RRC Resume Request1, and RRC Resume Complete are used in the resume procedure.

The RRC message transmitting unit 107 transmits the RRC message including the request information to the gNB 210 through the radio transmitting unit 101. Thereby, the terminal 100 can make a request to the gNB 210 for provision of the time information including the TSN time or the time information including the NR time, using the RRC message.

The RRC message transmitting unit 107 can include the request information in the RRC message for use in a case where the terminal 100 is in the connected state. In this case, the RRC message in which the request information is to be included, for example, RRC Reconfiguration Complete.

The MAC CE transmitting unit 109 includes the request described above in a new MAC CE, in the procedure of transition of the terminal 100 from the idle state or the inactive state to the connected state.

Specifically, the new MAC CE includes one-bit information ("0" or "1") indicating whether or not provision of the time information including the TSN time is to be requested. In a case where the terminal 100 requests provision of the time information, the MAC CE transmitting unit 109 sets the value of the one-bit information to "1", for example. In this case, the request information corresponds to the value "1" of the one-bit information.

Similarly, the new MAC CE includes one-bit information ("0" or "1") indicating whether or not provision of the time information including the NR time is to be requested. In a case where the terminal 100 requests provision of the time information, the MAC CE transmitting unit 109 sets the value of the one-bit information to "1", for example. In this case, the request information corresponds to the value "1" of the one-bit information.

Note that the new MAC CE can include two-bit information ("00", "01", "11", or "11") indicating whether or not provision of the time information including the TSN time or the time information including the NR time is to be requested. In a case where the terminal 100 requests provision of the time information including the TSN time, the MAC CE transmitting unit 109 sets the value of the two-bit information to "01", for example. Meanwhile, in a case where the terminal 100 requests provision of the time information including the NR time, the MAC CE transmitting unit 109 sets the value of the two-bit information to "10", for example. In this case, the request information corresponds to the value "01" or "10" of the two-bit information.

Moreover, the new MAC CE can include flag information, index information, or Boolean information, instead of one-bit information. In this case, the MAC CE transmitting unit 109 sets the request information, with the flag information, the index information, or the Boolean information included in the new MAC CE.

The MAC CE transmitting unit 109 transmits the new MAC CE including the request information to the gNB 210 through the radio transmitting unit 101. Thereby, the MAC CE transmitting unit 109 can make a request to the gNB 210 for provision of the time information including the TSN time or the time information including the NR time, using the new MAC CE.

The control unit 111 controls each functional block included in the terminal 100.

The control unit 111 starts the procedure of transition of the terminal 100 from the idle state or the inactive state to the connected state.

The control unit 111 determines which type of time information is to be requested to the gNB 210 for provision, the time information including the TSN time or the time information including the NR time.

After determining the time information to be requested to the gNB 210, the control unit 111 determines which type of message is to include the request information, the RRC message or the new MAC CE.

In a case where it is determined that the RRC message is to include the request information, the control unit 111 instructs the RRC message transmitting unit 107 to include the request information in the RRC message. Meanwhile, in a case where it is determined that the new MAC CE is to include the request information, the control unit 111 instructs the MAC CE transmitting unit 109 to include the request information in the new MAC CE.

When the radio receiving unit 103 receives the time information including the TSN time, the control unit 111 instructs the time information processing unit 105 to acquire the TSN time from the time information and to transmit the TSN time to the TSN end station 40.

When the radio receiving unit 103 receives the time information including the NR time, the control unit 111 performs the operation of the terminal 100, in synchronization with the NR time after acquisition of the NR time from the time information.

### (3) Operation of Control System

Next, the operation of the control system 10 will be described. Specifically, time delivery will be described, in which the NR network (specifically, gNB 210) provides the time information including the TSN time, in accordance with a request from the terminal 100.

### (3.1) Time Delivery

For the time delivery in the present embodiment, in the procedure of transition of the terminal 100 from the idle state or the inactive state to the connected state, the terminal 100 transmits a message requesting provision of the time information including the TSN time or the time information including the NR time, to the NR network and then receives the time information from the NR network.

### (3.1.1) Exemplary Operation 1

In exemplary operation 1, the time delivery in the connection procedure of transition of the terminal 100 from the idle state to the connected state, will be described.

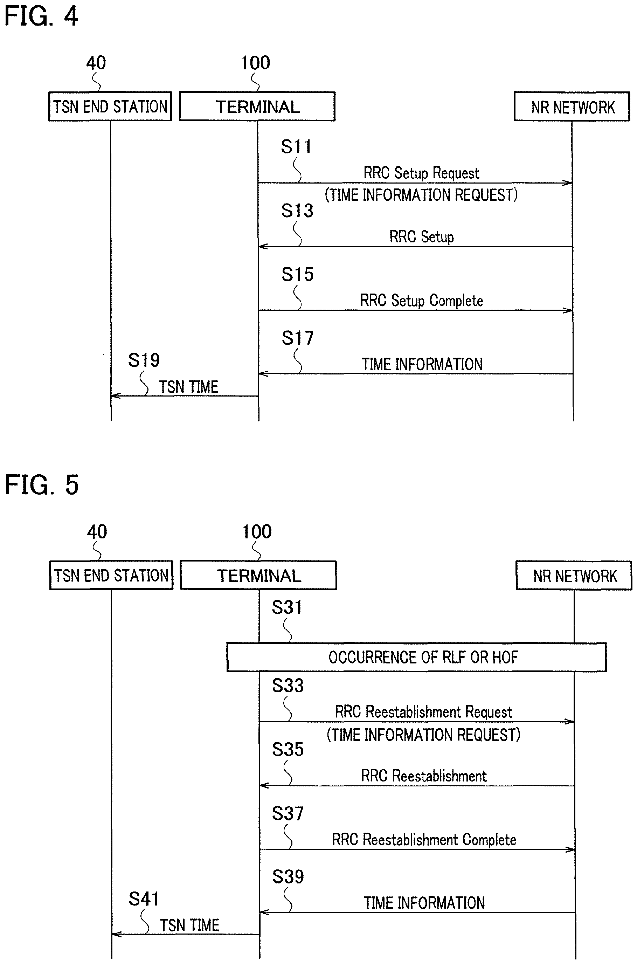

Fig. 4 is a sequence diagram of the connection procedure in time delivery. As illustrated in Fig. 4, the terminal 100 in the idle state performs cell selection, and transmits RRC Setup Request to the NR network for setup of RRC connection between the terminal 100 and the NR network (S11).

In S11, the terminal 100 includes the request information in RRC Setup Request. In this case, RRC Setup Request is also referred to as a message requesting provision of the time information including the TSN time or the time information including the NR time.

After setting an RRC connection between the terminal 100 and the NR network in accordance with reception of RRC Setup Request, the NR network transmits an RRC setup message (RRC Setup) to the terminal 100 for notification of configuration information regarding the RRC connection (S13) .

After receiving RRC Setup, the terminal 100 transmits RRC Setup Complete to the NR network for notification of completion of setup of the RRC connection based on the configuration information regarding the RRC connection (S15) .

On the basis of reception of RRC Setup Complete, the NR network ascertains that the terminal 100 has received the configuration information regarding the RRC connection. Subsequently, the context information is shared between the terminal 100 and the NR network. This brings the terminal 100 into the connected state.

After the terminal 100 is brought into the connected state, the NR network transmits the time information including the TSN time or the time information including the NR time to the terminal 100 (S17). For example, the NR network transmits the time information to the terminal 100 by unicast.

After receiving the time information from the NR network, the terminal 100 acquires the TSN time or the NR time from the received time information.

In a case where the TSN time is acquired, the terminal 100 provides the acquired TSN time to the TSN end station 40 (S19).

Meanwhile, in a case where the NR time is acquired, the terminal 100 performs operation, in synchronization with the acquired NR time.

Note that, instead of including the request information in RRC Setup Request in S11, the terminal 100 can include the request information in RRC Setup Complete in S15.

### (3.1.2) Exemplary Operation 2

In exemplary operation 2, the time delivery in the reconnection procedure of transition of the terminal 100 from the idle state to the connected state, will be described.

Fig. 5 is a sequence diagram of the reconnection procedure in time delivery. As illustrated in Fig. 5, occurrence of radio link failure (RLF) or handover failure (HOF) between the terminal 100 and the NR network causes interruption in sharing of the context information between the terminal 100 and the NR network, so that the terminal 100 is brought into the idle state (S31).

The terminal 100 performs cell selection or cell reselection, and transmits RRC Reestablishment Request to the NR network as a request for re-setup of RRC connection between the terminal 100 and the NR network (S33).

In S33, the terminal 100 includes the request information in RRC Reestablishment Request. In this case, RRC Reestablishment Request is also referred to as a message requesting provision of the time information including the TSN time or the time information including the NR time.

After re-setting RRC connection between the terminal 100 and the NR network in accordance with reception of RRC Reestablishment Request, the NR network transmits a RRC reestablishment message (RRC Reestablishment) to the terminal 100 for notification of configuration information regarding the RRC connection (S35).

After receiving RRC Reestablishment, the terminal 100 transmits RRC Reestablishment Complete to the NR network for notification of completion of re-setup of the RRC connection based on the configuration information regarding the RRC connection (S37).

On the basis of reception of RRC Reestablishment Complete, the NR network ascertains that the terminal 100 has received the configuration information regarding the RRC connection. Subsequently, the context information is shared between the terminal 100 and the NR network. This brings the terminal 100 into the connected state.

After the terminal 100 is brought into the connected state, the NR network transmits the time information including the TSN time or the time information including the NR time to the terminal 100 (S39). For example, the NR network transmits the time information to the terminal 100 by unicast.

After receiving the time information from the NR network, the terminal 100 acquires the TSN time or the NR time from the received time information.

In a case where the TSN time is acquired, the terminal 100 provides the acquired TSN time to the TSN end station 40 (S41).

Meanwhile, in a case where the NR time is acquired, the terminal 100 performs operation, in synchronization with the acquired NR time.

Note that, instead of including the request information in RRC Reestablishment Request in S33, the terminal 100 can include the request information in RRC Reestablishment Complete in S37.

### (3.1.3) Exemplary Operation 3

In exemplary operation 3, the time delivery in the resume procedure of transition of the terminal 100 from the inactive state to the connected state, will be described.

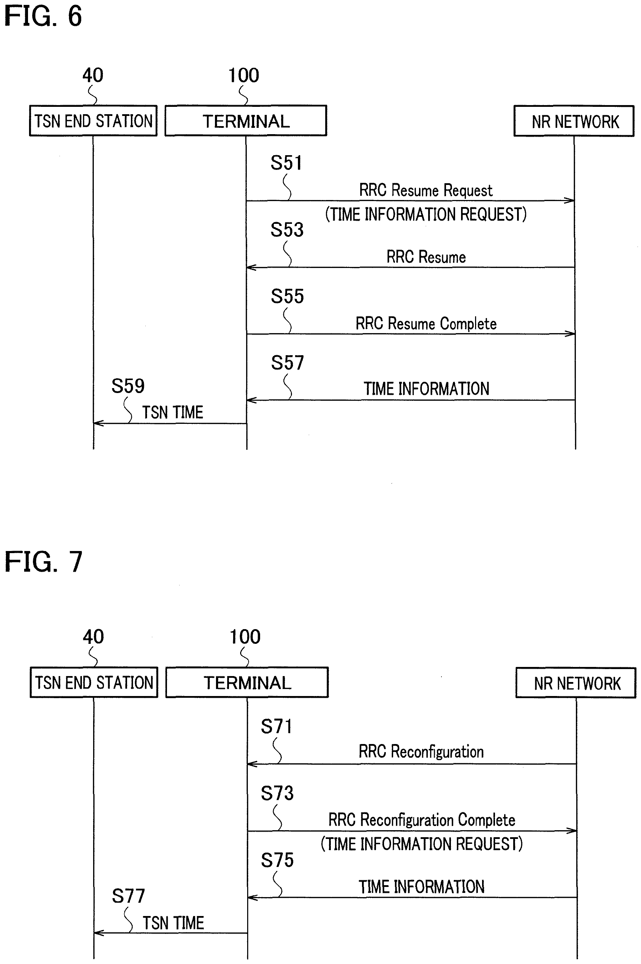

Fig. 6 is a sequence diagram of the resume procedure in time delivery. As illustrated in Fig. 6, the terminal 100 performs cell selection or cell reselection, and transmits RRC Resume Request to the NR network as a request for resumption of an RRC connection between the terminal 100 and the NR network (S51).

In S51, the terminal 100 includes the request information in RRC Resume Request. In this case, RRC Resume Request is also referred to as a message requesting provision of the time information including the TSN time or the time information including the NR time.

Note that, in S51, instead of transmitting RRC Resume Request, the terminal 100 can transmit RRC Resume Request1 to the NR network. In this case, the terminal 100 includes the request information in RRC Resume Request1.

After resuming the RRC connection between the terminal 100 and the NR network in accordance with reception of RRC Resume Request, the NR network transmits an RRC resume message (RRC Resume) to the terminal 100 for notification of configuration information regarding the RRC connection (S53) .

After receiving RRC Resume, the terminal 100 transmits RRC Resume Complete to the NR network for notification of completion of resumption of the RRC connection based on the configuration information regarding the RRC connection (S55) .

On the basis of reception of RRC Resume Complete, the NR network ascertains that the terminal 100 has received the configuration information regarding the RRC connection. This brings the terminal 100 into the connected state.

After the terminal 100 is brought into the connected state, the NR network transmits the time information including the TSN time or the time information including the NR time to the terminal 100 (S57). For example, the NR network transmits the time information to the terminal 100 by unicast.

After receiving the time information from the NR network, the terminal 100 acquires the TSN time or the NR time from the received time information.

In a case where the TSN time is acquired, the terminal 100 provides the acquired TSN time to the TSN end station 40 (S59).

Meanwhile, in a case where the NR time is acquired, the terminal 100 performs operation, in synchronization with the acquired NR time.

Note that, instead of including the request information in RRC Resume Request in S51, the terminal 100 can include the request information in RRC Resume Complete in S55.

### (3.1.4) Exemplary Operation 4

In exemplary operations 1 to 3, the terminal 100 includes the request information in the RRC message and then transmits the RRC message to the NR network. In exemplary operation 4, the terminal 100 includes the request information in the new MAC CE and then transmits the new MAC CE to the NR network.

Specifically, in the connection procedure, the reconnection procedure, or the resume procedure, before the terminal 100 is brought into the connected state, the terminal 100 includes the request information in the new MAC CE and then transmits the new MAC CE to the NR network.

### (3.2) Others

In addition to the procedure of transition of the terminal 100 from the idle state or the inactive state to the connected state, after transition of the terminal 100 to the connected state, a message requesting provision of the time information including the TSN time or the time information including the NR time can be transmitted to the NR network, and the time information can be received from the NR network.

Fig. 7 is a sequence diagram of the reconfiguration procedure in time delivery. As illustrated in Fig. 7, in a case where an RRC connection is reconfigured, the NR network transmits an RRC reconfiguration message (RRC Reconfiguration) for notification of configuration information regarding the RRC connection (S71).

The terminal 100 transmits an RRC reconfiguration complete message (RRC Reconfiguration Complete) to the NR network for notification of completion of reconfiguration of the RRC connection based on the configuration information regarding the RRC connection (S73).

In S73, the terminal 100 includes the request information in RRC Reconfiguration Complete. In this case, RRC Reconfiguration Complete is also referred to as a message requesting provision of the time information including the TSN time or the time information including the NR time.

On the basis of reception of RRC Reconfiguration Complete, the NR network ascertains that the terminal 100 have received the configuration information regarding the RRC connection, and transmits the time information including the TSN time or the time information including the NR time to the terminal 100, in accordance with the request from the terminal 100 (S75).

After receiving the time information from the NR network, the terminal 100 acquires the TSN time or the NR time from the received time information.

In a case where the TSN time is acquired, the terminal 100 provides the acquired TSN time to the TSN end station 40 (S77).

Meanwhile, in a case where the NR time is acquired, the terminal 100 performs operation, in synchronization with the acquired NR time.

### (4) Action and Effect

According to the embodiment described above, in the procedure of transition from the idle state or the inactive state to the connected state in the RRC layer, the terminal 100 transmits a message requesting provision of the time information including the TSN time or the time information including the NR time to the NR network.

Such configuration enables the NR network to grasp that the terminal 100 has requested provision of the time information, before the terminal 100 transitions to the connected state in the RRC layer or at the point in time the terminal 100 transitions to the connected state in the RRC layer.

Thus, the terminal 100 can receive the time information promptly from the NR network.

Moreover, even in a case where the connection between the terminal 100 and the NR network is disconnected, provision of the time information can be requested to the NR network at the time of reconnection of the terminal 100 to the NR network.

Thus, the terminal 100 can receive the time information persistently from the NR network.

Therefore, with prompt and persistent reception of the time information from the NR network, the terminal 100 can provide the TSN time to the TSN end station 40, so that high-precision time synchronization can be realized in TSN.

Moreover, the terminal 100 can receive the time information promptly and persistently from the NR network, so that the terminal 100 can perform operation promptly and persistently, in synchronization with the NR time.

According to the embodiment described above, the terminal 100 requests provision of the time information, using the RRC message.

Such a configuration enables the terminal 100 to request provision of the time information, using the RRC message to be transmitted in the procedure of transition from the idle state or the inactive state to the connected state in the RRC layer.

Thus, the terminal 100 can make a request to the NR network for provision of the time information, with no new message.

Therefore, even in a case where a plurality of terminals requests the time information, increase can be avoided in the traffic of the NR network.

According to the embodiment described above, the terminal 100 requests provision of the time information, using the MAC CE.

Such a configuration enables the terminal 100 to transmit the information requesting the time information, using control signaling in the MAC layer, with no message in the RRC layer.

Thus, the terminal 100 can transmit the information requesting the time information, without establishment of connection in the RRC layer.

### (5) Other Embodiments

The present invention has been described in detail above with the embodiment. It is obvious to a person skilled in the art that the present invention is not limited to the embodiment and thus various modifications and improvements can be made.

### (5-1) Modification 1

According to the embodiment described above, each of the RRC message and the new MAC CE includes one-bit information ("0" or "1") indicating whether or not provision of the time information including the TSN time is to be requested and one-bit information ("0" or "1") indicating whether or not provision of the time information including the NR time is to be requested. However, this configuration is not limitative.

Each of the RRC message and the new MAC CE needs to include at least one of one-bit information ("0" or "1") indicating whether or not provision of the time information including the TSN time is to be requested and one-bit information ("0" or "1") indicating whether or not provision of the time information including the NR time is to be requested.

### (5-2) Modification 2

According to the embodiment described above, the control system 10 has one TSN GM (TSN GM20) connected with the NR system 30. However, this configuration is not limitative.

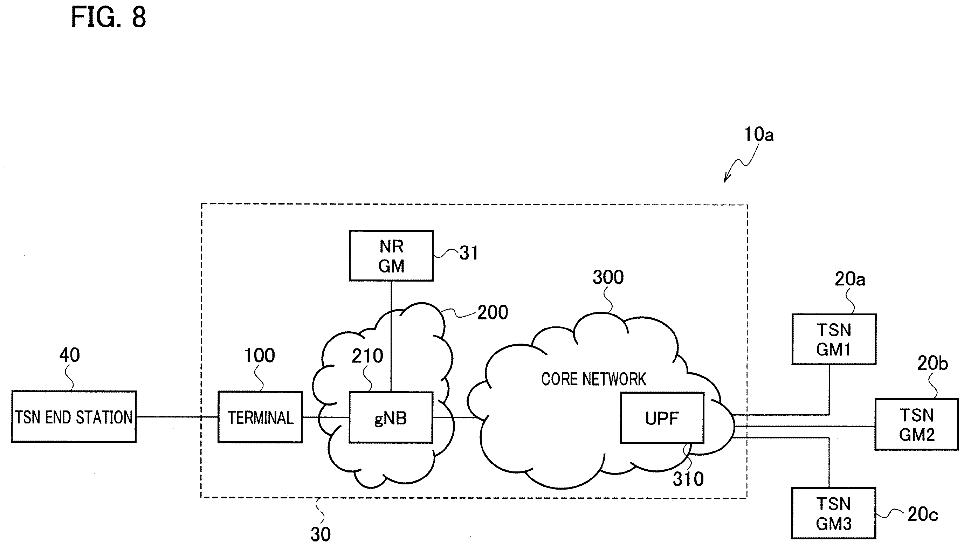

Fig. 8 is an overall schematic configuration diagram of a control system 10a. As illustrated in Fig. 8, the control system 10a has TSN GMs 20a, 20b, and 20c connected with a NR system 30.

The TSN GM 20a generates TSN time T1 on the basis of a clock oscillated by the TSN GM20a. The TSN GM 20b generates TSN time T2 on the basis of a clock oscillated by the TSN GM20b. The TSN GM 20c generates TSN time T3 on the basis of a clock oscillated by the TSN GM20c.

The core network 300 receives the TSN times T1, T2, and T3 from the TSN GMs 20a, 20b, and 20c through the UPF 310. The core network 300 transmits the received TSN times T1, T2, and T3 to the gNB 210.

In advance, the gNB 210 is notified of time identifiers TSN1, TSN2, and TSN3 from the core network 300 or an operator.

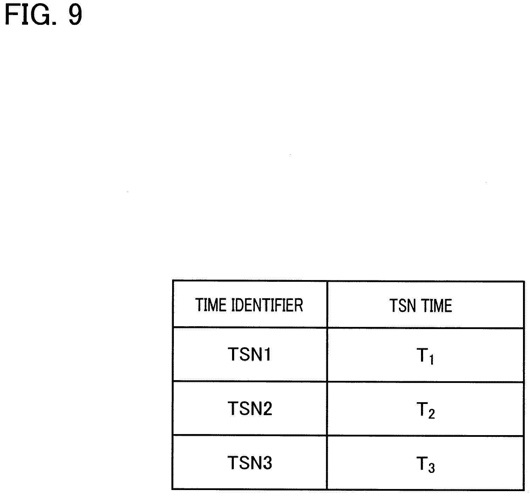

Fig. 9 is a table showing an association between TSN times and time identifiers. After receiving the TSN times T1, T2, and T3 from the core network 300, the gNB 210 associates the previously notified time identifiers TSN1, TSN2, and TSN3 with the TSN times T1, T2, and T3, respectively, in accordance with a rule given in advance from the core network 300 or the operator, as illustrated in Fig. 9.

After receiving request information from a terminal 100 in the procedure of transition from an idle state or an inactive state to a connected state, the gNB 210 transmits time information including the TSN times T1, T2, and T3 and the time identifiers TSN1, TSN2, and TSN3 associated with the TSN times T1, T2, and T3, to the terminal 100.

In the control system 10a, in a case where the TSN end station 40 operates in synchronization with the TSN time T1, the terminal 100 provides the TSN time 1 to the TSN end station 40. In this case, in advance, the terminal 100 is notified of the time identifier TSN1 from the core network 300 or the operator.

After receiving the time information including the TSN times T1, T2, and T3 and the time identifiers TSN1, TSN2, and TSN3 associated with the TSN times T1, T2, and T3, from the gNB 210, the terminal 100 acquires the TSN times T1, T2, and T2 and the time identifiers TSN1, TSN2, and TSN3 from the received time information. The terminal 100 selects the TSN time T1 associated with the previously notified time identifier TSN1, among the acquired TSN times T1, T2, and T3. The terminal 100 provides the selected TSN time T1 to the TSN end station 40.

Specifically, in the terminal 100, after the radio receiving unit 103 receives the time information including the TSN times T1, T2, and T3 and the time identifiers TSN1, TSN2, and TSN3 associated with the TSN times T1, T2, and T3, from the gNB 210, the time information processing unit 105 acquires the TSN times T1, T2, and T3 and the time identifiers TSN1, TSN2, and TSN3 from the received time information. The control unit 111 instructs the time information processing unit 105 to select the TSN time T1 associated with the time identifier TSN1.

On the basis of the instruction, the time information processing unit 105 selects the TSN time T1 associated with the time identifier TSN1 among the TSN times T1, T2, and T3. The time information processing unit 105 transmits the selected TSN time T1 to the TSN end station 40 through the radio transmitting unit 101.

Note that, in the procedure of transition from the idle state or the inactive state to the connected state, the terminal 100 can transmit an RRC message or a new MAC CE including the request information and the time identifier TSN1, to the gNB 210.

Specifically, in the terminal 100, in a case where it is determined that an RRC message is to include the request information, the control unit 111 instructs the RRC message transmitting unit 107 to include the request information and the time identifier TSN1 in the RRC message.

The RRC message transmitting unit 107 transmits the RRC message including the request information and the time identifier TSN1, to the gNB 210 through the radio transmitting unit 101.

Meanwhile, in a case where it is determined that a new MAC CE is to include the request information, the control unit 111 instructs the MAC CE transmitting unit 109 to include the request information and the time identifier TSN1 in the new MAC CE.

The MAC CE transmitting unit 109 transmits the new MAC CE including the request information and the time identifier TSN1, to the gNB 210 through the radio transmitting unit 101.

After receiving the request information and the time identifier TSN1 from the terminal 100, the gNB 210 selects the TSN time T1 associated with the time identifier TSN1 among the TSN times T1, T2, and T3. The gNB 210 transmits time information including the selected TSN time T1, to the terminal 100.

For example, the gNB 210 transmits the time information to the terminal 100, using dedicated signaling (RRC message). Examples of the RRC message include DLInformationTransfer and RRCReconfiguration.

This enables the terminal 100 to receive the time information including the TSN time T1 associated with the time identifier TSN1. The terminal 100 acquires the TSN time T1 from the received time information and transmits the acquired TSN time T1 to the TSN end station 40.

This enables the terminal 100 to provide the individual TSN time allocated to the TSN end station 40, to the TSN end station 40. Thus, with a plurality of different TSN times, a control source in TSN can control the TSN end station 40 independently every terminal.

### (5-3) Others

The block configuration diagram (Fig. 2) used for explaining the above-described embodiment illustrates blocks of functional unit. Those functional blocks (structural components) are realized by a desired combination of at least one of hardware and software. A method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (structural component) that causes transmitting is called a transmitting unit or a transmitter. For any of the above, as explained above, the realization method is not particularly limited to any one method.

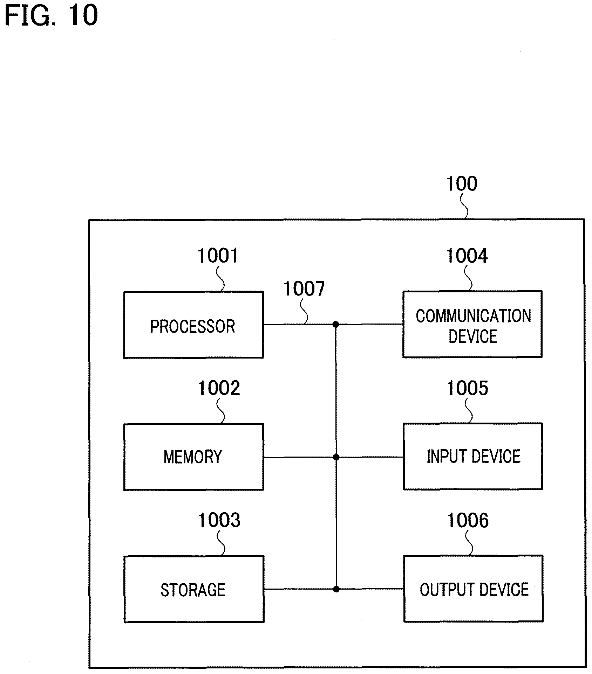

Furthermore, the terminal 100 explained above may function as a computer that performs the processing of the radio communication method of the present disclosure. Fig. 10 is a diagram illustrating an example of a hardware configuration of the terminal. As illustrated in Fig. 10, the terminal can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. A hardware configuration of the device may be constituted by including one or plurality of the devices illustrated in the figure, or may be constituted by without including a part of the devices.

The functional blocks of the device can be realized by any of hardware elements of the computer device or a desired combination of the hardware elements.

Moreover, the processor 1001 performs operation by loading a predetermined software (program) on hardware such as the processor 1001 and the memory 1002, and realizes various functions of the device by controlling communication via the communication device 1004, and controlling at least one of reading and writing of data on the memory 1002 and the storage 1003.

The processor 1001, for example, operates an operating system to control the entire computer. The processor 1001 can be configured with a central processing unit (CPU) including an interface with a peripheral device, a control device, an operation device, a register, and the like.

Moreover, the processor 1001 reads a program (program code), a software module, data, and the like from at least one of the storage 1003 and the communication device 1004 into the memory 1002, and executes various processing according to them. As the program, a program that is capable of executing on the computer at least a part of the operation explained in the above embodiments, is used. Alternatively, various processes explained above may be executed by one processor 1001 or may be executed simultaneously or sequentially by two or more processors 1001. The processor 1001 can be implemented by using one or more chips. Alternatively, the program can be transmitted from a network via a telecommunication line.

The memory 1002 is a computer readable recording medium and may configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including at least one of the memory 1002 and the storage 1003, a server, or other appropriate medium.

The communication device 1004 is hardware (transmission and reception device) capable of performing communication between computers via at least one of a wired network and a wireless network. The communication device 1004 is also called, for example, a network device, a network controller, a network card, a communication module, and the like.

The communication device 1004 may include a highfrequency switch, a duplexer, a filter, a frequency synthesizer, and the like in order to realize, for example, at least one of Frequency Division Duplex (FDD) and Time Division Duplex (TDD).

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information therebetween. The bus 1007 may be constituted by a single bus or may be constituted by separate buses between the devices.

Further, the device may be configured to include hardware such as a microprocessor, a Digital Signal Processor (DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB), System Information Block (SIB)), other signals, or a combination of these. The RRC signaling may be called RRC message, for example, or may be RRC Connection Setup message, RRC Connection Reconfiguration message, or the like.

Each of the above aspects/embodiments may be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from a higher layer (or lower layer) to a lower layer (or higher layer). It may be input and output via a plurality of network nodes.

The input and output information can be stored in a specific location (for example, a memory) or may be managed in a management table. The information to be input and output can be overwritten, updated, or added. The information can be deleted after outputting. The inputted information may be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

Note that the terms described in the present disclosure and terms necessary for understanding the present disclosure may be replaced by terms having the same or similar meanings. For example, at least one of a channel and a symbol may be a signal (signaling) . Also, a signal may be a message. Further, a component carrier (CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, may be expressed as a relative value from a predetermined value, or may be represented by corresponding other information. For example, the radio resource may be instructed by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of at least one of a base station and a base station subsystem that perform the communication service in this coverage.

In the present disclosure, the terms "mobile station (MS)", "user terminal", "user equipment (UE)", "terminal" and the like can be used interchangeably.

The mobile station may be called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), or a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same applies). For example, each of the aspects/embodiments of the present disclosure may be applied to a configuration that allows communication between a base station and a mobile station to be replaced with communication between a plurality of mobile stations (which may be referred to as, for example, Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms such as an uplink channel, a downlink channel, or the like may be read as a side channel.

Likewise, a mobile station in the present disclosure may be read as a base station. In this case, the base station may have the function of the mobile station.

A radio frame may be configured by one or more frames in the time domain. One frame or each of a plurality frames in the time domain may be called a subframe.

Further, the subframe may be configured by one or more slots in the time domain. The subframe may have a fixed time length (for example, 1 ms) that does not depend on numerology.

The numerology may be a communication parameter applied to at least one of transmission and reception of a certain signal or channel. For example, the numerology may indicate at least one of subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by the transceiver in the time domain, and the like.

The slot may be configured by one or more symbols (Orthogonal Frequency Division Multiplexing (OFDM)) symbols, Single Carrier Frequency Division Multiple Access (SC-FDMA) symbols, and the like) in the time domain. The slot may be a time unit based on the numerology.

The slot may include a plurality of minislots. Each minislot may be configured by one or more symbols in the time domain. The minislot may also be called a subslot. The minislot may be configured by fewer symbols than slots. PDSCH (or PUSCH) transmitted in a time unit larger than the minislot may be called a PDSCH (or PUSCH) mapping type A. PDSCH (or PUSCH) transmitted using the minislot may be called a PDSCH (or PUSCH) mapping type B.

Each of the radio frame, the subframe, the slot, the minislot, and the symbol represents a time unit for transmitting a signal. Different names may be used for the radio frame, the subframe, the slot, the minislot, and the symbol, respectively.

For example, one subframe may be called a transmission time interval (TTI), a plurality of consecutive subframes may be called TTI, and one slot or one minislot may be called TTI. That is, at least one of the subframe and TTI may be a subframe (1 ms) in existing LTE, a period shorter than 1 ms (for example, 1-13 symbols), or a period longer than 1 ms. Note that a unit representing TTI may be called a slot, a minislot, or the like instead of the subframe.

Here, TTI refers to a minimum time unit of scheduling in radio communication, for example. For example, in the LTE system, the base station performs scheduling to allocate radio resources (frequency bandwidth, transmission power, and the like that can be used in each user terminal) to each user terminal in units of TTI. Note that a definition of TTI is not limited thereto.

TTI may be a transmission time unit such as a channelencoded data packet (transport block), a code block, or a code word, or may be a processing unit of scheduling, link adaptation, or the like. Note that when TTI is given, a time interval (for example, the number of symbols) in which a transport block, a code block, a code word, and the like are actually mapped may be shorter than TTI.

Note that when one slot or one minislot is called TTI, one or more TTIs (that is, one or more slots or one or more minislots) may be a minimum time unit of the scheduling. Further, the number of slots (the number of minislots) configuring the minimum time unit of the scheduling may be controlled.

TTI having a time length of 1 ms may be called normal TTI (TTI in LTE Rel. 8-12), normal TTI, long TTI, a normal subframe, a normal subframe, a long subframe, a slot, or the like. TTI shorter than normal TTI may be called shortened TTI, short TTI, partial TTI (partial or fractional TTI), a shortened subframe, a short subframe, a minislot, a subslot, a slot, or the like.

Note that long TTI (for example, normal TTI, subframe, or the like) may be read as TTI having a time length exceeding 1 ms, and short TTI (for example, shortened TTI or the like) may be read as TTI having a TTI length less than the TTI length of long TTI and equal to or more than 1 ms.

The resource block (RB) is a resource allocation unit in the time domain and the frequency domain, and may include one or more continuous subcarriers in the frequency domain. The number of subcarriers included in RB may be the same regardless of numerology, for example, twelve. The number of subcarriers included in RB may be determined on the basis of numerology.

Further, the time domain of RB may include one or more symbols, and may have a length of one slot, one minislot, one subframe, or 1 TTI. 1 TTI, one subframe, or the like may be configured by one or more resource blocks.

Note that one or more RBs may be called a physical resource block (Physical RB: PRB), a subcarrier group (SubCarrier Group: SCG), a resource element group (Resource Element Group: REG), a PRB pair, an RB pair, or the like.

Further, the resource block may be configured by one or more resource elements (RE). For example, 1RE may be a radio resource region of one subcarrier and one symbol.

A bandwidth part (BWP) (may be called a partial bandwidth or the like) may represent a subset of consecutive common resource blocks (RBs) for certain numerology in a certain carrier. Here, the common RB may be specified by an index of RB based on a common reference point of the carriers. PRB may be defined by certain BWP, and may be numbered within BWP.

BWP may include BWP for UL (UL BWP) and BWP for DL (DL BWP). For UE, one or more BWPs may be set in one carrier.

At least one of set BWPs may be active, and UE may not assume that a predetermined signal/channel is transmitted and received outside active BWP. Note that the "cell", the "carrier", and the like in the present disclosure may be read as "BWP".

The above-described structures such as the radio frame, the subframe, the slot, the minislot, and the symbol are merely examples. For example, the structures such as the number of subframes included in the radio frame, the number of slots per subframe or radio frame, the number of minislots included in the slot, the number of symbols and RBs included in the slot or minislot, the number of subcarriers included in RB, the number of symbols in TTI, the symbol length, the cyclic prefix (CP) length, and the like can be variously changed.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, and printed electrical connections, and as some non-limiting and non-exhaustive examples, by using electromagnetic energy having wavelengths in the radio frequency domain, the microwave region, and light (both visible and invisible) region, and the like.

The reference signal may be abbreviated as RS and may be called pilot according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in the present disclosure, these articles may include a plurality of nouns following these articles.

The terms "determining" and "determining" used in the present disclosure may include a wide variety of operations. In "determining" and "deciding", for example, judging, calculating, computing, processing, deriving, investigating, looking up (search or inquiry) (for example, searching in a table, database, or other data structure), and ascertaining may be considered as "determining" and "deciding". Further, in "determining" and "deciding", receiving (for example, receiving information), transmitting (for example, transmitting information), input, output, and accessing (for example, accessing data in a memory) may be considered as "determining" and "deciding". Further, in "determining" and "deciding", "resolving", "selecting", "choosing", "establishing", and "comparing" may be considered as "determining" and "deciding". In other words, in "determining" and "deciding", any operation may be considered as "determining" and "deciding". Further, "determining (deciding)" may be read as "assuming", "expecting", "considering", and the like.

In the present disclosure, the term "A and B are different" may mean "A and B are different from each other". Note that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

### EXPLANATION OF REFERENCE NUMERALS

- 10, 10a: Control system
- 20, 20a, 20b, 20c: TSN GM
- 30: NR system
- 31: NR GM
- 40: TSN end station
- 100: Terminal
- 101: Radio transmitting unit
- 103: Radio receiving unit
- 105: Time information processing unit
- 107: RRC message transmitting unit
- 109: MAC CE transmitting unit
- 111: Control unit
- 200: NG-RAN
- 210: gNB
- 300: Core network
- 310: UPF
- 1001: Processor
- 1002: Memory
- 1003: Storage
- 1004: Communication device
- 1005: Input device
- 1006: Output device
- 1007: Bus

## Claims

1. A terminal comprising:
a control unit that starts a procedure of transition of the terminal from a non-connection state to a connection state in a radio resource control layer, between the terminal and a radio network;
a transmitting unit that transmits a message requesting provision of time information including time used in the radio network, to the radio network, in the procedure; and
a receiving unit that receives the time information from the radio network.

2. A terminal comprising:
a control unit that starts a procedure of transition of the terminal from a non-connection state to a connection state in a radio resource control layer, between the terminal and a radio network;
a transmitting unit that transmits a message requesting provision of time information including time used in another network different from the radio network, to the radio network, in the procedure; and
a receiving unit that receives the time information from the radio network.

3. The terminal according to claim 1 or 2, wherein the transmitting unit requests provision of the time information, using a radio resource control message.

4. The terminal according to claim 1 or 2, wherein the transmitting unit requests provision of the time information, using a control element in a medium access control layer.
